# EUROPÄISCHE PATENTSCHRIFT

(11) **EP 0 794 086 B1**
(45) Veröffentlichungstag und Bekanntmachung des Hinweises auf die Patenterteilung: **05.09.2001**
(21) Anmeldenummer: 97101646.4
(22) Anmeldetag: 03.02.1997
(51) Int. Cl.: B60P 1/64, B60P 1/48

(54) **Lastfahrzeug mit einer Einrichtung zum Be- und Entladen eines Behälters**
Lorry with an installation for loading and unloading a container
Camion ayant une installation pour le chargement et le déchargement d'un conteneur

(30) Priorität: 05.03.1996 DE 19608472; 08.03.1996 DE 29604355 U; 17.09.1996 DE 19637891
(43) Veröffentlichungstag der Anmeldung: 10.09.1997
(73) Patentinhaber: Franz Xaver Meiller Fahrzeug- und Maschinenfabrik-GmbH & Co KG, 80997 München (DE)
(72) Erfinder: Grigoleit, Ulrich, Dipl.-Ing. (FH), 81249 München (DE); Seewald, Wolfgang, Dipl.-Ing. (FH), 82110 Germering (DE)
(74) Vertreter: Tiesmeyer, Johannes, Dr.

(56) Entgegenhaltungen:
- EP-A- 0 571 821
- EP-A- 0 621 157
- FR-A- 2 313 230

## Beschreibung

Die Erfindung betrifft eine Vorrichtung zum Hinaufziehen und Absetzen eines Behälters auf bzw. von einem Aufbau eines Lastentransportfahrzeugs über eine Ladestütze am hinteren Ende des Aufbaus, mit einer Ladearmvorrichtung, die einen Hebearm aufweist, der - im montierten Zustand am Fahrzeug - um eine quer zur Fahrzeuglängsrichtung verlaufende Schwenkachse zwischen einer Grundstellung und einer Auslegerstellung relativ zu dem Aufbau mittels eines Schwenkantriebs schwenkbar ist, um den Behälter auf den Aufbau hinaufzuziehen bzw. von dem Aufbau abzusetzen, und der sich in der Grundstellung von der Schwenkachse in Fahrzeuglängsrichtung nach vorn erstreckt, und mit einem Hakenarm, der zur Kopplung mit dem Behälter an dem von der Schwenkachse entfernten Ende des Hebearms angeordnet ist und einen Haken zur Eingriffnahme eines Bügels aufweist, der an einer beim Hinaufziehen des Behälters in Fahrzeuglängsrichtung nach vorn zu positionierenden, vorderen Stirnseite des Behälters angeordnet ist, wobei der Hakenarm quer zur Schwenkachse von dem Hebearm derart absteht, dass er in eine im Wesentlichen vertikal aufrechte, zentrale Position in Front der vorderen Stirnseite des Behälters gelangt, wenn der Hebearm beim Hinaufziehen des Behälters in die Grundstellung geschwenkt wird.

Eine Vorrichtung der vorstehend genannten Art ist beispielsweise aus der DE-25 24 584 C2 bekannt. Die bekannte Vorrichtung ist als sogenannte Abrollkippvorrichtung ausgebildet, bei der die Ladearmvorrichtung einen sich in der Grundstellung von einer die Schwenkachse definierenden Schwenkgelenkanordnung im Wesentlichen horizontal nach vorn erstreckenden Hebearm aufweist, der an seinem von der Schwenkachse entfernten (vorderen) Ende eine in der Grundstellung im Wesentlichen vertikal nach oben hin abstehenden Hakenarm hat. Der Hakenarm weist an seinem freien Ende einen Haken auf, der mit einer Öse an der vorderen Stirnseite eines betreffenden Behälters in Eingriff bringbar ist, um den Behälter an die Ladearmvorrichtung anzukoppeln. Der Hebearm ist über die Schwenkgelenkanordnung mit einem teleskopisch längenverstellbaren Kippverlängerungsarm verbunden, welcher an seinem von der Schwenkachse entfernten Ende über eine Kippgelenkanordnung mit dem Aufbau verbunden ist. Die Kippgelenkanordnung definiert eine zur Schwenkachse des Hebearms parallele Kippachse am hinteren Ende des Aufbaus. In einem Kippbetriebszustand ist der Hebearm gegen Verschwenken relativ zum Kippverlängerungsarm verriegelt, so dass der Hebearm gemeinsam mit dem Kippverlängerungsarm um die Kippachse verschwenkt und somit ein an der Ladearmvorrichtung abgestützter Behälter in eine entsprechende Kippstellung am Fahrzeug gebracht werden kann.

Die Verriegelung des Hebearms relativ zum Kippverlängerungsarm im Kippbetriebszustand erfolgt unter Einbeziehung des zu kippenden Behälters, wobei ein Hakenelement an einem bei der teleskopischen Längenverstellung der Ladearmvorrichtung nicht bewegten Teil des Kippverlängerungsarmes in eine Öse des Behälters eingreift, wenn die Ladearmvorrichtung in ihrer ausgefahrenen Teleskopstellung ist. Solange das Hakenelement in die Öse des Behälters eingreift, kann der Hebearm nicht gegenüber dem Kippverlängerungsarm verschwenkt werden.

Zur Einstellung des Ladebetriebszustandes, in dem der Behälter vom Aufbau des Fahrzeugs abgesetzt oder auf den Aufbau des Fahrzeugs gezogen werden kann, wird die Ladearmvorrichtung in der Grundstellung des Hebearms zunächst in ihre eingezogene Teleskopstellung überführt. Dabei kommt die Behälteröse von dem Hakenelement frei, woraufhin der Hebearm relativ zum Kippverlängerungsarm um die Schwenkachse schwenkbar ist, um den Behälter über eine Rollenanordnung am Fahrzeugheck vom Aufbau abzusetzen bzw. auf den Aufbau hinaufzuziehen.

Der Schwenkantrieb zum Verschwenken des Hebearms umfasst ein hydraulisches Kolben-Zylinder-Aggregat und dient auch als Antrieb für den Kippvorgang und für die teleskopische Längenverstellung der Ladearmvorrichtung in der Grundstellung des Hebearms.

Bei Abrollkippvorrichtungen der vorstehend genannten Art steht der Hakenarm etwa in Breitenmitte des Fahrzeugs von dem von der Schwenkachse entfernten Ende des Hebearms ab. Eine solche Anordnung hat sich im Hinblick auf die dynamischen und kinematischen Verhältnisse beim Kippbetrieb und beim Wechselladebetrieb gut bewährt und erleichtert das Manövrieren des Fahrzeugs in eine Stellung, in der der Hakenarm den Aufnahmebügel eines vom Boden aufzuladenden Behälters ergreifen kann.

Die insoweit bewährte Konstruktion der Ladearmvorrichtung nach der DE-25 24 584 C2 hat jedoch den Nachteil, dass der Hakenarm den Zugang zu einem zentralen Bereich der vorderen Stirnseite eines aufgeladenen Behälters versperrt und im Bereich zwischen Führerhaus und vorderer Stirnseite des Behälters vergleichsweise viel Platz in Anspruch nimmt, der ggf. für andere Aggregate des Fahrzeugs günstig wäre. Dies erschwert den Einsatz von Aggregaten des Fahrzeugs, die durch die vordere Stirnseite des Behälters hindurch mit dem Behälter in Funktionszusammenhang zu bringen sind. Ein Beispiel hierfür wäre ein Mülltransportfahrzeug, bei dem der betreffende Behälter als auswechselbarer Müllcontainer ausgebildet ist, welcher über eine in seiner vorderen Stirnseite befindliche Öffnung mit einer Müllverdichtereinheit an der Rückseite des Führerhauses des Fahrzeugs zusammenwirkt, wobei die Verdichtereinheit den ihr zugeführten Müll durch die Behälteröffnung hindurch in den Behälter fördert. Um eine solche Anwendung realisieren zu können, wird in der EP-0 571 821 A1 vorgeschlagen, bei einer Abrollkippvorrichtung der in der DE-25 24 584 C2 beschriebenen Art den Hakenarm als biegesteifen Rahmen auszubilden, der mittig an seiner oberen Querstrebe den Haken aufweist. Durch die von dem biegesteifen Rahmen gebildete Öffnung hindurch wird bei dem Gegenstand der EP-0 571 821 A1 Müll von einer Verdichtereinheit in den mit einer entsprechenden Öffnung an seiner Stirnseite versehenen Behälter eingebracht.

Der Erfindung liegt die Aufgabe zugrunde, eine mit einer Ladearmvorrichtung mit schwenkbarem Hebearm ausgerüstete Vorrichtung zum Hinaufziehen und Absetzen eines Behälters auf bzw. von einem Aufbau eines Lastentransportfahrzeugs bereitzustellen, bei der ein Zugriff auf einen auf dem Aufbau befindlichen Behälter von dessen vorderer Stirnseite her am Fahrzeug einfacher möglich ist als bisher.

Zur Lösung dieser Aufgabe wird ausgehend von einer Vorrichtung mit den Merkmalen des Oberbegriffs des Anspruchs 1 erfindungsgemäß vorgeschlagen, dass der Hakenarm bei in der Grundstellung befindlichem Hebearm aus der im Wesentlichen vertikal aufrechten, zentralen Position in Front des Behälters entfernbar an dem Hebearm angeordnet ist.

Im Gegensatz zu dem gemäß der EP-0 571 821 A1 eingeschlagenen Weg, den aus der DE-25 24 584 C2 bekannten Hakenarm in Form eines starr am Hebearm befestigten Rahmens mit einer großen zentralen Ladeöffnung auszubilden, sieht die Erfindung vor, den Hakenarm so mit dem Hebearm zu verbinden, dass er bei Bedarf aus dem zentralen Bereich vor der vorderen Stirnseite eines aufgeladenen Behälters entfernbar ist, so dass die vordere Stirnseite des Behälters oder eine ggf. darin vorgesehene Öffnung von vorn her zugänglich ist, beispielsweise für Aggregate des Fahrzeugs, die über die vordere Stirnseite des Behälters funktionell mit dem Behälter zusammenwirken sollen. Ein derartiges Aggregat kann beispielsweise eine Müllverdichtereinheit sein die an der Rückseite des Führerhauses angeordnet und dazu eingerichtet ist, den ihr zugeführten Müll durch eine Öffnung in der vorderen Stirnseite eines auf dem Fahrzeug befindlichen Behälters hindurch in den Behälter zu fördern.

Bei einer technisch minimal aufwendigen Lösung könnte es im Rahmen der Erfindung vorgesehen sein, dass der Hakenarm in der Grundstellung des Hebearms insgesamt vom Hebearm abnehmbar ist. Zu diesem Zweck könnte beispielsweise eine Steckverbindung oder dergleichen zwischen Hebearm und Hakenarm vorgesehen sein, die durch Verriegelungsmittel gegen unbeabsichtigtes Lösen des Hakenarms sicherbar ist.

Eine weitere Möglichkeit im Rahmen der Erfindung besteht darin, den Hakenarm an einer parallel zu der Schwenkachse verlaufenden Führungsschiene an dem von der Schwenkachse entfernten Ende des Hebearms vorzusehen, so dass der Hakenarm bei Bedarf längs der Führungsschiene aus dem zentralen Bereich vor der vorderen Stirnseite des Behälters heraus seitlich verschiebbar ist, um die Behälterstirnseite leichter zugänglich zu machen.

Bei auf dem Aufbau befindlichem Behälter kann der Haken in der Grundstellung des Hebearms von dem Bügel des Behälters gelöst werden.

Gemäß einer besonders bevorzugten Ausführungsform der Erfindung ist der Hakenarm nach Lösen des Hakens vom Bügel aus der im Wesentlichen vertikal aufrechten, zentralen Position heraus in eine Passivstellung verschwenkbar, um den Zugang zu einem zuvor vom Hakenarm überdeckten zentralen Bereich der vorderen Stirnseite des Behälters freizugeben.

Die durch eine entsprechende Schwenkhalterung an dem Hebearm definierte Schwenkachse des Hakenarms verläuft vorzugsweise quer zur Schwenkachse des Hebearms, so dass der Hakenarm in eine Passivstellung verschwenkt werden kann, in der er im Wesentlichen horizontal von dem Hebearm seitlich absteht und die vordere Stirnseite eines auf dem Aufbau befindlichen Behälters im Wesentlichen vollständig überlappungsfrei für den Zugang von vorn freigibt, wobei der Hakenarm eine längliche Form haben kann, wie sie aus der DE-25 24 584 C2 bekannt ist. Der Hakenarm ist vorzugsweise fernsteuerbar zwischen der vertikal aufrechten, zentralen Position und der Passivstellung mittels eines Schwenkantriebs schwenkbar, der vorzugsweise ein hydraulisch oder pneumatisch längenverstellbares Kolben-Zylinder-Aggregat umfasst, das einerseits an dem Hebearm und andererseits an dem Hakenarm gelenkig angeordnet ist.

Vorzugsweise ist der Hakenarm teleskopisch längenverstellbar ausgebildet. Dies erleichtert das Lösen des Hakens vom Aufnahmebügel eines auf dem Aufbau befindlichen Behälters und das Ankoppeln des Hakens an den Aufnahmebügel. Ferner kann der Haken aufgrund der teleskopischen Längenverstellbarkeit so verkürzt werden, dass er in seiner horizontalen Passivstellung nicht über das maximal zulässige Seitenbegrenzungsmaß des Fahrzeugs hinaus seitlich absteht. Insbesondere im Zusammenhang mit einem teleskopisch verkürzbaren Hakenarm ist eine Lösung denkbar, bei der der Hakenarm um eine parallel zur Schwenkachse des Hebearms verlaufende Schwenkachse in die Passivstellung schwenkbar ist.

Zur ferngesteuerten teleskopischen Längenverstellung des Hakenarms ist vorzugsweise ein Stellantrieb vorgesehen, der beispielsweise hydraulisch oder pneumatisch wirkt.

Um einen auf dem Aufbau befindlichen Behälter auch bei in Passivstellung befindlichem Hakenarm sicher an die Ladearmvorrichtung ankoppeln zu können, ist gemäß einer Weiterbildung der Erfindung eine Kupplungseinrichtung vorgesehen, die vorzugsweise einen am Hebearm verschiebbar geführten Kupplungsbolzen umfasst, der mit einer Kupplungsöse des Behälters in Eingriff bringbar ist.

Zur Betätigung des Kupplungsbolzens ist vorzugsweise ein mechanisches Getriebe zwischen dem Kupplungsbolzen und dem Hakenarm vorgesehen, das den Kupplungsbolzen in Abhängigkeit von der Schwenkstellung des Hakenarms steuert, so dass der Kupplungsbolzen in eine Position zur Eingriffnahme der Kupplungsöse gelangt, wenn der Hakenarm in seine Passivstellung einrückt.

Der Schwenkantrieb zum Schwenken des Hebearms umfasst in einer bevorzugten Ausführungsform der Erfindung wenigstens ein einerseits über eine erste Gelenkverbindung an dem Hebearm und andererseits über eine zweite Gelenkverbindung an dem Aufbau oder einer relativ zum Aufbau ortsfesten Stelle angelenktes, doppelt wirkendes Kolben-Zylinder-Aggregat, bei dem die Kolbenstange relativ zu dem Zylinder ein- und ausfahrbar ist, um den Hebearm um die Schwenkachse zu schwenken.

Vorzugsweise ist die erfindungsgemäße Vorrichtung zum Hinaufziehen und Absetzen eines Behälters nach Anspruch 1 auch dazu eingerichtet, einen auf dem Aufbau befindlichen Behälter um eine nächst der Ladestütze und parallel zur Schwenkachse verlaufende Kippachse zu kippen, wobei die Ladearmvorrichtung einen Kippverlängerungsarm aufweist, der an seinem vorderen Ende über eine die Schwenkachse definierende Schwenkgelenkanordnung und an seinem hinteren Ende mit einer die Kippachse definierende Kippgelenkanordnung verbunden ist, wobei ferner eine Verriegelungseinrichtung vorgesehen ist:, mittels welcher der Hebearm in seiner Grundstellung gegen Verschwenken um die Schwenkachse am Kippverlängerungsarm festlegbar ist, so dass der Hebearm und der Kippverlängerungsarm bei entsprechender Betätigung des Kolben-Zylinder-Aggregates eine gemeinsame Kippbewegung um die Kippachse ausführen. Die Verriegelungseinrichtung weist ein von dem Kippverlängerungsarm gehaltenes, wahlweise in eine erste Stellung zur Festlegung des Hebearms an dem Kippverlängerungsarm oder in eine zweite Stellung zur Festlegung des Kippverlängerungsarms relativ zu dem Aufbau bewegbares Verriegelungselement auf, wobei in der zweiten Stellung zur Festlegung des Kippverlängerungsarms relativ zu dem Aufbau der Hebearm um die Schwenkachse schwenkbar ist.

Bei einer derartigen Lösung ist es im Gegensatz zu dem Gegenstand der DE-25 24 584 C2 nicht mehr erforderlich, die Ladearmvorrichtung teleskopisch längenverstellbar auszubilden, um den Kippbetriebszustand einerseits und den Ladebetriebszustand andererseits einleiten zu können. Die für die vorstehend genannten zwei Verriegelungsfunktionen wechselweise einsetzbare Verriegelungseinrichtung kann mit sehr einfachen Mitteln realisiert werden und bietet ein hohes Maß an Sicherheit in Bezug auf die jeweilige Verriegelung in der gewünschten Betriebsart.

Vorzugsweise ist das Verriegelungselement ein axial verschiebbarer Verriegelungsbolzen, der beim Einrücken in seine erste Stellung in eine Verriegelungsöse des Hebearms eingreift und der in seiner zweiten Stellung in eine Verriegelungsöse des Aufbaus unter Freigabe der Verriegelungsöse des Hebearms eingreift.

Die Verriegelungseinrichtung kann beispielsweise von Hand mechanisch betätigt werden. Vorzugsweise weist sie jedoch einen hydraulischen, pneumatischen oder elektromotorischen Antrieb für das Verriegelungselement auf, der insbesondere fernbetätigbar ausgebildet sein kann.

Gemäß einer weiterhin bevorzugten Ausgestaltung der Erfindung liegt die erste Gelenkverbindung des Kolben-Zylinder-Aggregats des Hebearm-Schwenkantriebs bei in der Grundstellung befindlichem Hebearm - im montierten Zustand am Fahrzeug - in Bezug auf die Fahrzeuglängsrichtung vor der zweiten Gelenkverbindung des Kolben-Zylinder-Aggregats.

Eine solche Lösung hat den Vorteil, dass das Kolben-Zylinder-Aggregat nicht über die Ladearmvorrichtung hinaus nach vorn absteht, so dass die erfindungsgemäße Vorrichtung insgesamt kürzer gebaut werden kann, ohne die Funktionalität des Kolben-Zylinder-Aggregats einschränken zu müssen. Überdies ergibt sich der Vorteil, dass der Raumbereich zwischen dem Führerhaus des Fahrzeugs und der vorderen Stirnseite eines auf dem Aufbau des Fahrzeugs befindlichen Behälters auch von dem Kolben-Zylinder-Aggregat nicht oder allenfalls unwesentlich beansprucht wird.

Bei der Vorrichtung nach der DE-25 24 584 C2 befindet sich die erste Gelenkverbindung, über die das Kolben-Zylinder-Aggregat an dem Hebearm angelenkt ist, in Fahrzeuglängsrichtung hinter der zweiten Gelenkverbindung, die das Kolben-Zylinder-Aggregat mit dem Aufbau verbindet, wobei die zweite Gelenkverbindung überdies vor dem vorderen Ende des in seiner Grundstellung befindlichen Hebearms liegt.

Gemäß einer bevorzugten Ausführungsform der Erfindung mit einer entsprechenden Anordnung der Gelenkverbindungen des Kolben-Zylinder-Aggregats ist es vorgesehen, dass die Ladearmvorrichtung in einem Schubbetriebsmodus bei in der Grundstellung befindlichem Hebearm durch den Antrieb des Kolben-Zylinder-Aggregats des Hebearm-Schwenkantriebs zwischen einer ausgefahrenen Stellung und einer eingezogenen Stellung teleskopisch längenverstellbar ist, um einen auf dem Aufbau befindlichen Behälter vor- oder zurückzuschieben, wobei eine Blockiereinrichtung zum Ein- und Ausschalten des Schubbetriebsmodus durch Freigeben bzw. Unterbinden der teleskopischen Verschiebbarkeit vorgesehen ist, wobei die geometrischen Verhältnisse derart festgelegt sind, dass die Kolbenstange des Kolben-Zylinder-Aggregats zumindest teilweise aus dem Zylinder ausgefahren ist, wenn die Ladearmvorrichtung in ihrer ausgefahrenen Teleskopstellung ist, so dass die Ladearmvorrichtung in die eingezogene Stellung durch Einfahren der Kolbenstange überführbar ist, und dass nach Ausschalten des Schubbetriebsmodus der Hebearm durch Ausfahren der Kolbenstange aus seiner Grundstellung heraus schwenkbar ist.

Eine solche Lösung hat den Vorteil, dass der Kolbenstangenhub für das Vor- und Zurückschieben eines Behälters bei der Bemessung des maximalen Gesamthubs der Kolbenstange nicht dem für die Schwenk- bzw. Kippoperationen der Ladearmvorrichtung erforderlichen Kolbenstangenhub zu überlagern ist. Der maximale Gesamthub der Kolbenstange bemisst sich nach dem für die Ausführung der Schwenk-bzw. Kippoperationen erforderlichen Hub.

Das Ein- bzw. Ausschalten des Schubbetriebsmodus ist dann möglich, wenn die Ladearmvorrichtung in ihrer eingezogenen Teleskopstellung ist, aus der heraus Schwenk- bzw. Kippvorgänge der Ladearmvorrichtung vorgenommen werden, so dass der Gesamthub der Kolbenstange für die betreffenden Schwenk- bzw. Kippoperationen ausgenutzt werden kann. Andererseits steht der gesamte Kolbenstangenhub auch im Schubbetriebsmodus zur Verfügung. Dies hat den Vorteil, dass wahlweise Behälter mit im größeren Umfang unterschiedlichen Längen stets in eine optimale Position in Fahrzeuglängsrichtung auf dem Aufbau verschoben werden können. Das für all diese Funktionen verwendete Kolben-Zylinder-Aggregat kann vergleichsweise kompakt ausgebildet sein und beansprucht - wie erwähnt - in Fahrzeuglängsrichtung keinen Platz über die Ladearmvorrichtung hinaus.

Es ist insbesondere vorgesehen, dass der Hakenarm in seine Passivstellung bringbar ist, wenn die Ladearmvorrichtung in ihrer eingezogenen Teleskopstellung ist. Im Schubbetriebsmodus kann dann ein aufgeladener Behälter durch Ausfahren der Kolbenstange des Kolben-Zylinder-Aggregats in Fahrzeuglängsrichtung nach vorn verschoben werden, um ihn etwa mit betreffenden Aggregaten des Fahrzeugs in Verbindung zu bringen, wobei der in Passivstellung befindliche Hebearm nicht stört.

Zur Realisierung der teleskopischen Längenverstellbarkeit der Ladearmvorrichtung wird gemäß einer Ausführungsform vorgeschlagen, dass der Hebearm zwei teleskopisch längenverstellbar aneinander geführte Hebearmteile aufweist, wobei die Blockiereinrichtung dazu betätigbar ist, die beiden Hebearmteile in ihrer eingezogenen Teleskopstellung miteinander zu verriegeln, um den Schubbetriebsmodus auszuschalten.

Sofern die Vorrichtung auch zum Kippen des Behälters am Fahrzeug ausgebildet ist, wird zur Realisierung der teleskopischen Längenverstellbarkeit der Ladearmvorrichtung zusätzlich oder alternativ vorgeschlagen, dass nach Ausschalten des Schubbetriebsmodus der Hebearm - je nach Stellung des Verriegelungselementes der Verriegelungseinrichtung - um die Schwenkachse schwenkbar oder gemeinsam mit dem Kippverlängerungsarm um die Kippachse kippbar ist.

Zur Realisierung der Längenverstellbarkeit der Ladearmvorrichtung kann zusätzlich oder alternativ der Kippverlängerungsarm zwei teleskopisch längenverstellbar aneinander geführte Kippverlängerungsarmteile aufweisen, wobei die Blockiereinrichtung dazu betätigbar ist, die beiden Kippverlängerungsarmteile in deren eingezogener Teleskopstellung miteinander zu verriegeln, um den Schubbetriebsmodus auszuschalten.

Die Blockiereinrichtung kann beispielsweise ein mechanisch von Hand zu betätigendes Blockierelement aufweisen. Vorzugsweise ist jedoch ein hydraulisch, pneumatisch oder elektromotorisch angetriebenes Blockierelement vorgesehen, welches insbesondere fernbetätigbar ist.

Hinzuzufügen ist noch, dass die Ladestütze, über die ein betreffender Behälter auf den Aufbau hinaufgezogen - oder vom Aufbau abgesetzt wird, vorzugsweise wenigstens eine drehbare Rolle umfasst, die den Behälter an dem Aufbau abstützt.

Bevorzugte Ausführungsbeispiele der Erfindung werden nachstehend unter Bezugnahme auf die Zeichnungen näher erläutert.

Darin zeigt:
- Fig. 1: ein bevorzugtes Ausführungsbeispiel einer erfindungsgemäßen Vorrichtung mit einem relativ zum Hebearm verschwenkbaren Hakenarm zum Hinaufziehen und Absetzen eines Behälters in einer Seitenansicht im montierten Zustand am Fahrzeug, wobei die Vorrichtung in einem Ladebetriebszustand mit angekoppeltem Behälter dargestellt ist;
- Fig. 2a: die Vorrichtung nach Fig. 1 mit einem auf dem Aufbau befindlichen Behälter, wobei sich der Hebearm in seiner Grundstellung - und der Hakenarm in seiner vertikal aufrechten, zentralen Position in Front der vorderen Stirnseite des Behälters befindet und über seinen Haken in Eingriff mit einem Aufnahmebügel des Behälters gekoppelt ist und wobei sich die Ladearmvorrichtung in ihrer eingezogenen Teleskopstellung befindet;
- Fig. 2b: eine Vorderansicht der erfindungsgemäßen Vorrichtung nach Fig. 1 in dem Zustand gemäß Fig. 2a;
- Fig. 3: eine der Fig. 2a ähnliche Ansicht der Vorrichtung nach Fig. 1 und Fig. 2, wobei der Haken des Hakenarms vom Aufnahmebügel des Behälters gelöst ist und wobei sich die Ladearmvorrichtung in ihrer ausgefahrenen Teleskopstellung befindet, in der der Behälter gegenüber der Lage nach Fig. 2a weiter nach vorn verschoben ist;
- Fig. 4a: eine der Fig. 3 ähnliche Ansicht, wobei der Hakenarm in seine Passivstellung verschwenkt ist;
- Fig. 4b: eine Vorderansicht der Vorrichtung nach Fig. 1 - 4a in dem Zustand gemäß Fig. 4a;
- Fig. 4c: eine Draufsicht auf die Vorrichtung im Zustand gemäß Fig. 4a und Fig. 4b, wobei jedoch der Behälter in Fig. 4c nicht eingezeichnet ist;
- Fig. 5: eine Detaildarstellung eines Teils der Schwenkhalterung des Hakenarms und der Kupplungseinrichtung in Vordersicht bei abgenommenem Hakenarm;
- Fig. 6a: eine der Fig. 4c ähnliche Ansicht der Vorrichtung nach der Erfindung, wobei sich die Ladearmvorrichtung in ihrer eingezogenen Teleskopstellung befindet;
- Fig. 6b: eine Seitenansicht der Vorrichtung nach der Erfindung im Kippbetriebszustand, der ausgehend von der Stellung gemäß Fig. 6a eingeleitet worden ist;
- Fig. 7: eine Teilschnitt-Detaildarstellung der Verriegelungseinrichtung in einer Seitenansicht;
- Fig. 8: eine Teilschnitt-Detaildarstellung der Blockiereinrichtung in einer Draufsicht.

In den Seitenansichten gemäß Fig. 2a, Fig. 3 und Fig. 4a ist ein Seitenholm des Fahrzeugaufbaus nicht eingezeichnet, um den Blick auf die Ladearmvorrichtung freizugeben.

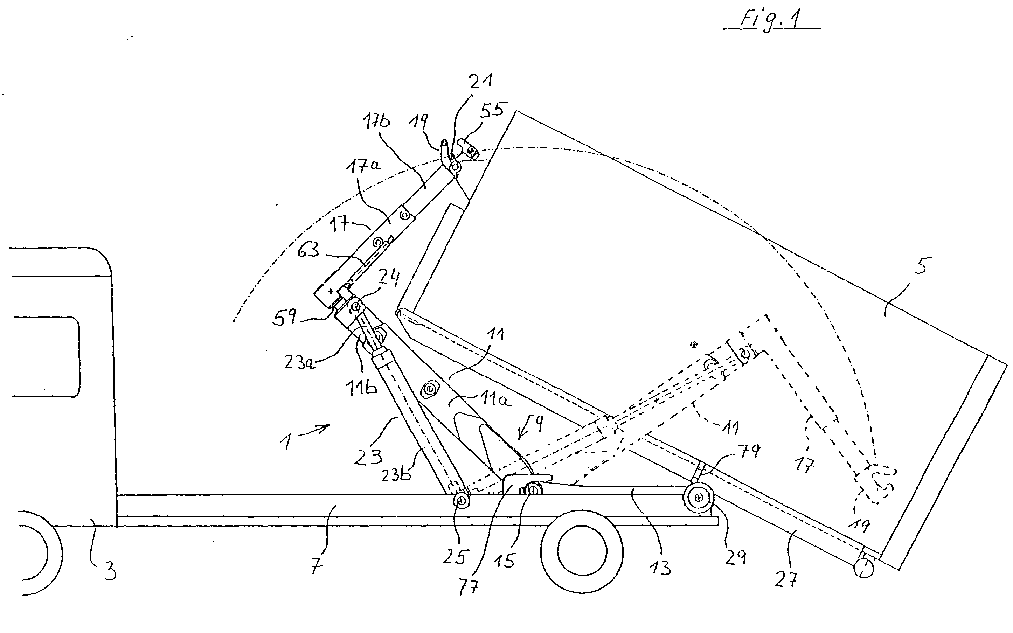

Bei dem bevorzugten Ausführungsbeispiel nach den Fig. 1 - 8 ist die erfindungsgemäße Vorrichtung zum Hinaufziehen und Absetzen eines Behälters auf bzw. von einem Aufbau eines Lastentransportfahrzeugs als sog. Abrollkippvorrichtung 1 ausgebildet. In Fig. 1 ist die Abrollkippvorrichtung im montierten Zustand an einem Lastkraftwagen 3 dargestellt, wobei Fig. 1 eine Momentaufnahme während des Hinaufziehens eines Wechselbehälters 5 auf den Aufbau 7 des Fahrzeugs 3 darstellt.

Die Abrollkippvorrichtung 1 ist an dem Aufbau 7, bei dem es sich um den Fahrgestell-Grundrahmen des Fahrzeugs 3 handeln kann, abgestützt und befestigt.

Sie umfasst eine allgemein mit 9 bezeichnete Ladearmvorrichtung mit einem Hebearm 11 und einem Kippverlängerungsarm 13.

Der Hebearm 11 ist bei dem in Fig. 1 gezeigten Ladebetriebszustand der Abrollkippvorrichtung 1 relativ zu dem Kippverlängerungsarm 13 zwischen der in Fig. 2a gezeigten Grundstellung und der in Fig. 1 mit gestrichelten Linien angedeuteten Auslegerstellung schwenkbar und weist an seinem von der Schwenkachse 15 entfernten Ende einen Hakenarm 17 auf, der in dem in den Fig. 1 und 2 dargestellten Ladebetriebszustand der Abrollkippvorrichtung 1 in Breitenmitte des Fahrzeugs 3 im Wesentlichen orthogonal von dem Hebearm 11 nach außen absteht und der an seinem vom Hebearm 11 entfernten Ende einen Haken 19 aufweist. Der Haken 19 dient dazu, einen Aufnahmebügel 21 des Behälters 5 in Eingriff zu nehmen, um den Behälter 5 im Ladebetriebszustand der Abrollkippvorrichtung 1 mit dem schwenkbaren Hebearm 11 gelenkig zu koppeln.

Wie aus Fig. 2b zu ersehen, ist der an der vorderen Stirnseite des Behälters 5 vorgesehene Aufnahmebügel 21 in einem oberen Bereich etwa in Breitenmitte des Behälters 5 angeordnet.

Zum Ankoppeln eines hinter dem Fahrzeug 3 auf dem Boden abgestellten Wechselbehälters 5 an den Haken 19 wird der Hebearm 11 in seine in Fig. 1 gestrichelt angedeutete Auslegerstellung verschwenkt und dann mit dem betreffenden Bügel 21 des Behälters in Eingriff gebracht.

Als Schwenkantrieb für den Hebearm 11 sind zwei doppelt wirkende, hydraulische Kolben-Zylinder-Aggregate 23 vorgesehen, von denen in Fig. 1 nur eines erkennbar ist. Die Kolbenstangen 23a der Kolben-Zylinder-Aggregate 23 sind in der Nähe des von der Schwenkachse 15 abstehenden Endes des Hebearms 11 über eine erste Gelenkverbindung 24 mit dem Hebearm 11 gelenkig verbunden, wohingegen die Zylinder 23b der Kolben-Zylinder-Aggregate 23 über eine zweite Gelenkverbindung 25 mit dem Aufbau 7 gelenkig verbunden sind. In einer alternativen Ausführungsform könnte der jeweilige Zylinder 23b am Hebearm 11 und die betreffende Kolbenstange 23a am Aufbau 7 angelenkt sein. Vorzugsweise liegt die Gelenkverbindung 25 zum Aufbau 7 in der Grundstellung des Hebarms 11 gemäß Fig. 2a in Fahrzeuglängsrichtung hinter der Gelenkverbindung 24 zum Hebearm 11.

Ausgehend von der in Fig. 2a gezeigten Grundstellung kann der Hebearm 11 durch Ausfahren der jeweiligen Kolbenstange 23a aus dem betreffenden Zylinder 23b in die Auslegerstellung verschwenkt werden, um einen zuvor auf den Aufbau hinaufgezogenen Behälter 5 wieder auf den Boden abzusetzen oder einen auf dem Boden hinter dem Fahrzeug stehenden Behälter 5 an den Haken 19 anzukoppeln. Durch Einziehen der Kolbenstangen 23a wird der Hebearm 11 wieder in die Grundstellung gemäß Fig. 2a verschwenkt, wobei ein an den Haken 19 angekoppelter Behälter 5 auf den Aufbau 7 des Fahrzeugs 3 hinaufgezogen wird.

Beim Hinaufziehen und beim Absetzen ist der Behälter 5 mit den am Behälterboden angebrachten Laufschienen 27 an einer Ladestütze 29 am hinteren Ende des Aufbaus 7 abgestützt, wobei die Ladestütze durch zwei Rollen 29 gebildet ist.

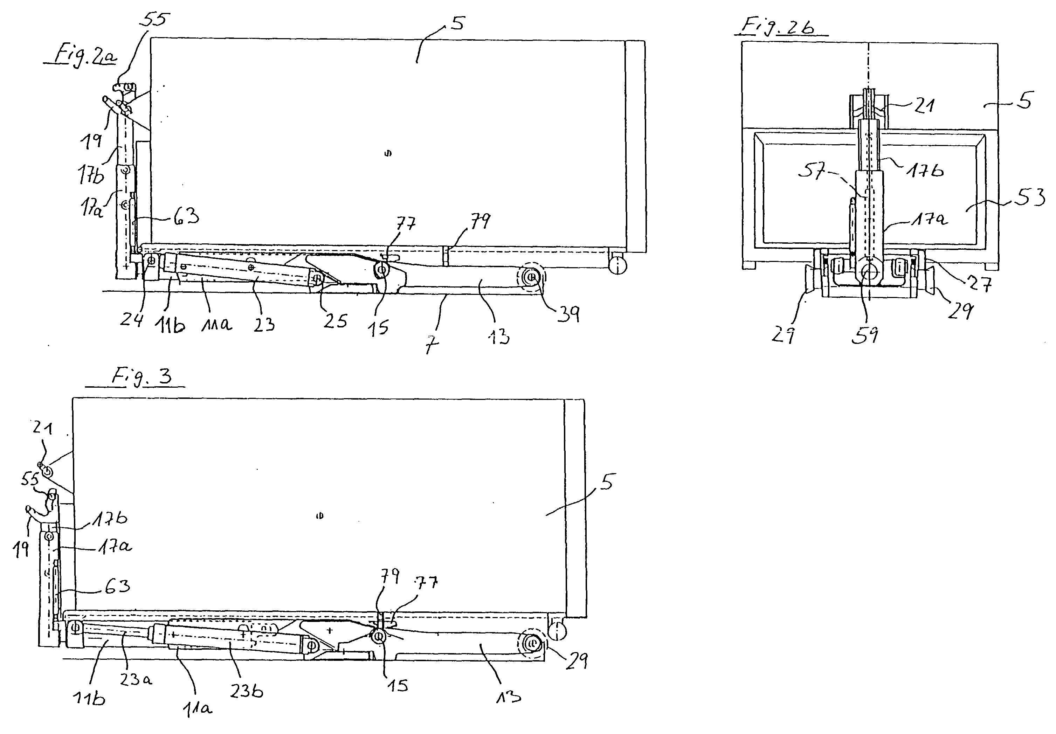

Die Ladearmvorrichtung 9 ist teleskopisch längenverstellbar ausgebildet, um einen auf dem Aufbau 7 befindlichen Behälter 5 in Fahrzeuglängsrichtung verschieben zu können (vgl. Fig. 2a und 3).

Die teleskopische Längenverstellbarkeit ist dadurch realisiert, dass der Hebearm 11 in einen äußeren Hebearmteil 11a und einen in dem äußeren Hebearmteil 11a teleskopisch verschiebbar gelagerten inneren Hebearmteil 11b unterteilt ist.

In Fig. 2a ist die Ladearmvorrichtung 9 in ihrer eingezogenen Teleskopstellung dargestellt, wohingegen Fig. 3 die Ladearmvorrichtung 9 in der ausgefahrenen Teleskopstellung zeigt.

Das Schwenken des Hebearms 11 um die Schwenkachse 15 im Ladebetriebszustand erfolgt bei teleskopisch eingezogenem inneren Hebearmteil 11b, wobei die Hebearmteile 11a, 11b im Ladebetriebszustand mittels einer Blockiereinrichtung 31 relativ zueinander blockiert sind, so dass der innere Hebearmteil 11b nicht mehr relativ zu dem äußeren Hebearmteil 11a teleskopisch verschiebbar ist.

In der Detail-Darstellung in Fig. 8 ist die Blockiereinrichtung 31 teilweise im Schnitt gezeigt. In Fig. 8 ist in Draufsicht das hintere Ende 35 des inneren Hebearmteils 11b zwischen betreffenden Abschnitten des äußeren Hebearmteils 11a gezeigt, wobei die Ladearmvorrichtung 9 in ihrer eingezogenen Teleskopstellung ist. In diesem Zustand ist gemäß Fig. 8 die am hinteren Ende 35 des inneren Hebearmteils 11b angeordnete Blockieröse 33 in Flucht zu einem an dem äußeren Hebearmteil 11a gehaltenen und geführten Blockierbolzen 37 der Blockiereinrichtung 31 ausgerichtet, welcher druckluftbetätigt in die Blockieröse 33 eingeführt werden kann, um den inneren Hebearmteil 11b an dem äußeren Hebearmteil 11a zu fixieren. Nach Fixierung des inneren Hebearmteils 11b am äußeren Hebearmteil 11a führt das Ausfahren der Kolbenstangen 23a der Kolben-Zylinder-Aggregate 23 im Ladebetriebszustand dazu, dass der Hebearm 11 um die Schwenkachse 15 verschwenkt wird (vgl. Fig. 1).

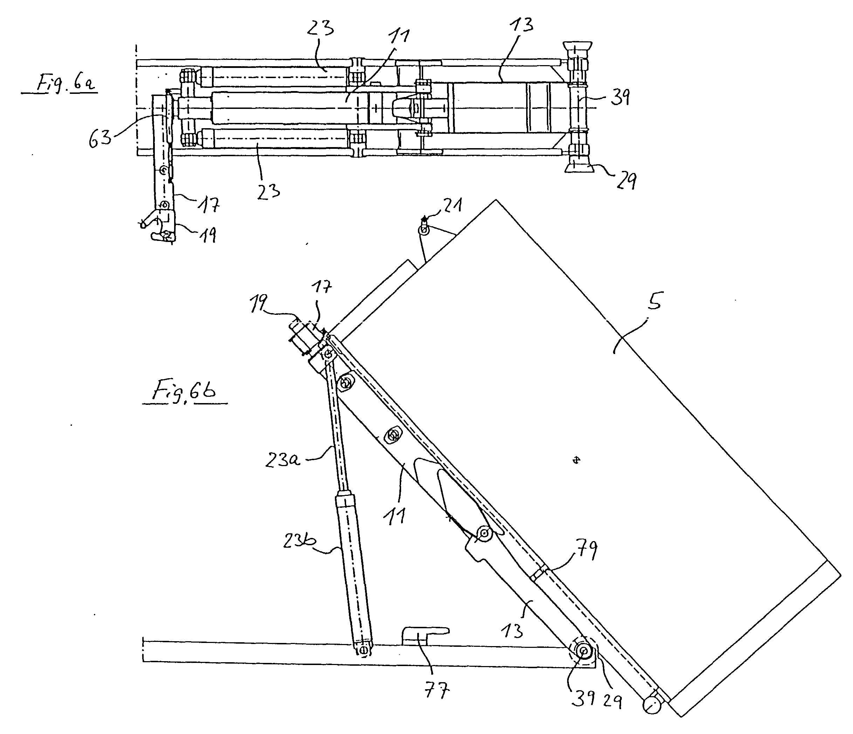

Wie in Fig. 6b gezeigt, ist die Abrollkippvorrichtung 1 ferner dazu eingerichtet, in einem Kippbetriebszustand einen an der Ladearmvorrichtung 9 fixierten Behälter 5 um eine parallel zu der Schwenkachse 15 verlaufende und mit der Achse der Rollen 29 zusammenfallende Kippachse 39 am Fahrzeug 3 zu kippen. In dem Kippbetriebszustand sind die Hebearmteile 11a und 11b mittels der Blockiereinrichtung 31 in der eingezogenen Teleskopstellung aneinander fixiert. Eine Verriegelungseinrichtung 41 sorgt dafür, dass der Hebearm 11 in dem Kippbetriebszustand gegen Verschwenken um die Schwenkachse 15 relativ zu dem Kippverlängerungsarm 13 gesichert ist, so dass das Ausfahren bzw. Einziehen der Kolbenstangen 23a der Kolben-Zylinder-Aggregate 23 zu einer gemeinsamen Kippbewegung von Hebearm 11 und Kippverlängerungsarm 13 um die Kippachse 39 führt.

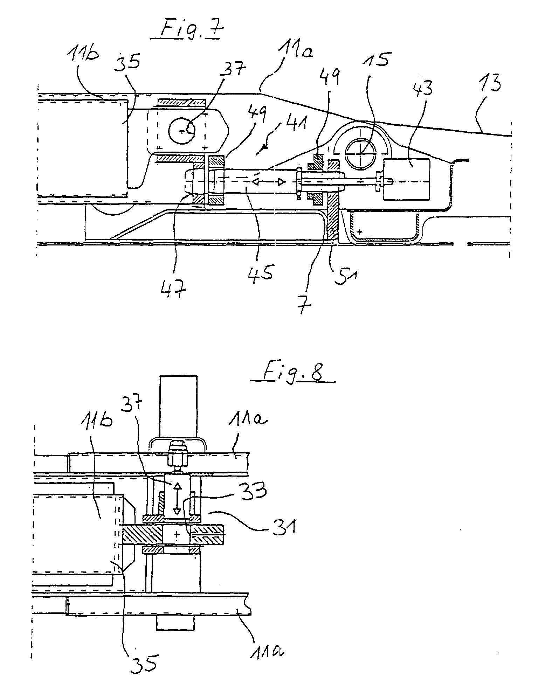

Die Verriegelungseinrichtung 41 ist in der Detail-Darstellung - Fig. 7 - erkennbar. Fig. 7 zeigt in einer Teilschnitt-Seitenansicht mit einer etwa in Breitenmitte des Aufbaus 7 verlaufenden Schnittebene einander benachbarte Abschnitte des Hebearms 11 und des Kippverlängerungsarms 13 sowie einen Teil des Aufbaus 7 in der Umgebung der Schwenkachse 15. Die Verriegelungseinrichtung 41 umfasst einen mittels Druckluftzylinder 43 in Fahrzeuglängsrichtung zwischen zwei Verriegelungsstellungen hin- und herverschiebbaren Verriegelungsbolzen 45, der an dem Kippverlängerungsarm 13 gehalten und geführt ist. In der ersten Verriegelungsstellung greift der Verriegelungsbolzen 45 mit seinem vorderen Ende in eine Verriegelungsöse 47 des Hebearms 11 ein mit der Folge, dass der Hebearm 11 nicht mehr relativ zu dem Kippverlängerungsarm 13 um die Schwenkachse 15 schwenkbar ist. Die Verriegelung von Hebearm 11 und Kippverlängerungsarm 13 durch Einschieben des Verriegelungsbolzens 45 in die Verriegelungsöse 47 erfolgt bei entsprechender Betätigung des Druckluftzylinders 43 dann, wenn der Hebearm 11 in seiner Grundstellung ist (vgl. Fig. 2a). Mit 49 sind in Fig. 7 Führungsösen für den Verriegelungsbolzen 45 bezeichnet, die an dem Kippverlängerungsarm 13 vorgesehen sind.

In der in Fig. 7 angedeuteten zweiten Verriegelungsstellung ist der Verriegelungsbolzen 45 aus der Verriegelungsöse 47 des Hebearms 11 herausgezogen, so dass der Hebearm 11 relativ zu dem Kippverlängerungsarm 13 um die Schwenkachse 15 schwenkbar ist. In der zweiten Verriegelungsstellung greift der Verriegelungsbolzen 45 in eine Verriegelungsöse 51 ein, die in Bezug auf den Aufbau 7 bzw. Grundrahmen ortsfest ist. Der Kippverlängerungsarm 13 ist dann in der im Wesentlichen horizontalen Lage gemäß Fig. 1 an dem Aufbau 7 festgelegt, so dass dann Ladebetrieb durch Schwenken des Hebearms 11 um Schwenkachse 15 erfolgen kann. Das Umschalten des Verriegelungsbolzens 45 zwischen der ersten und der zweiten Verriegelungsstellung kann erfolgen, wenn der Hebearm 11 und der Kippverlängerungsarm 13 in der im Wesentlichen horizontalen Grundstellung sind (vgl. Fig. 2a).

Eine erfindungsgemäße Besonderheit besteht darin, dass der Hakenarm 17 aus der in den Fig. 2a und 2b gezeigten aufrechten, zentralen Position in Front der vorderen Stirnseite des Behälters 5 entfernbar ist, so dass die vordere Stirnseite des aufgeladenen Behälters 5 und insbesondere die in Fig. 2b und 4b erkennbare Füllöffnung 53 in der vorderen Behälterstirnseite im Wesentlichen ohne Behinderung durch den Hakenarm 17 von vorn her zugänglich ist, beispielsweise für (nicht gezeigte) Aggregate des Fahrzeugs 3, die über die vordere Stirnseite des Behälters 5 funktionell mit dem Behälter 5 zusammenwirken sollen.

Im gezeigten Ausführungsbeispiel kann der Haken 19 des Hakenarms 17 ferngesteuert von dem Aufnahmebügel 21 des Behälters 5 gelöst werden. Zu diesem Zweck kann die obere Hakennase 55 des Hakens 19 mittels eines (nicht gezeigten) Druckluftzylinders druckluftbetätigt aus der Eingriffsstellung gemäß Fig. 2a in die Freigabestellung gemäß Fig. 3 verschwenkt werden. Der Hakenarm 17 besteht aus einem äußeren Hakenarmteil 17a und einem daran teleskopisch verschiebbar geführten, den Haken 19 tragenden inneren Hakenarmteil 17b. Zur vollständigen Freigabe des Aufnahmebügels 21 kann somit der obere Hakenarmteil 17b teleskopisch in den unteren Hakenarmteil 17a eingezogen werden, nachdem die obere Hakennase 55 in ihre Freigabestellung verschwenkt worden ist (vgl. Fig. 3).

Das teleskopische Verschieben des inneren Hakenarmteils 17b relativ zu dem äußeren Hakenarmteil 17a erfolgt ferngesteuert durch ein doppelt wirkendes, hydraulisches Kolben-Zylinder-Aggregat, das einerseits an dem äußeren Hakenarmteil 17a und andererseits an dem inneren Hakenarmteil 17b angeordnet und in den Fig. 2b und 4b mit gestrichelten Linien bei 57 angedeutet ist.

Der Hakenarm 17 ist über eine Schwenkhalterung 59 mit dem vorderen Ende des Hebearms 11 verbunden und kann mittels der Schwenkhalterung 59 aus der vom Aufnahmebügel 21 gelösten aufrechten Position gemäß Fig. 3 in eine Passivstellung gemäß Fig. 4a - 4c um eine quer zur Schwenkachse 15 des Hebearms 11 verlaufende Achse 61 verschwenkt werden, wobei der Hakenarm 17 in der Passivstellung im Wesentlichen horizontal von dem Hebearm 11 seitlich absteht und die vordere Stimseite des Behälters 5 und insbesondere die Füllöffnung 53 im Wesentlichen überlappungsfrei für einen Zugang von vorn her freigibt, wie dies in Fig. 4b erkennbar ist.

Das Schwenken des Hakenarms 17 um die Achse 61 erfolgt ferngesteuert mittels eines doppelt wirkenden, hydraulischen Kolben-Zylinder-Aggregats 63, das einerseits an dem Hebearm 11 und andererseits an dem äußeren Hakenarmteil 17a gelenkig befestigt ist.

Die vorstehend beschriebenen Bewegungsabläufe des Hakenarms 17 von dem Zustand gemäß Fig. 2a, b zu dem Zustand gemäß Fig. 4a, b, c sind selbstverständlich ferngesteuert umkehrbar, so dass der Haken 19 bei Bedarf wieder mit dem Aufnahmebügel 21 eines auf dem Aufbau 7 befindlichen Behälters 5 in Eingriff gebracht werden kann.

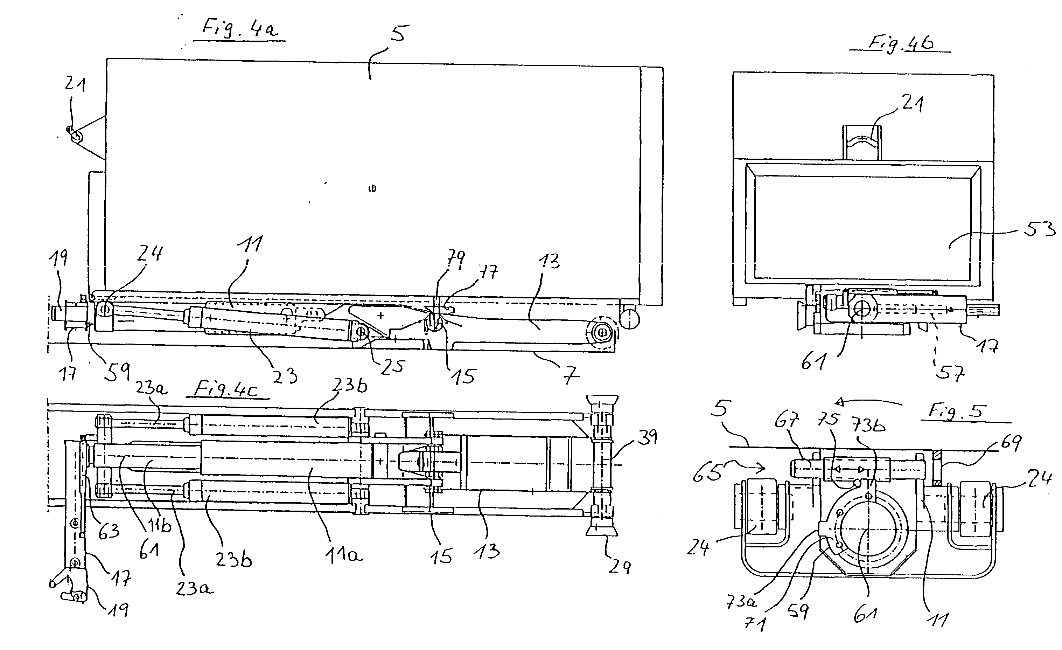

In der Detail-Darstellung in Fig. 5 sind in einer Ansicht von vorn eine Kupplungseinrichtung 65 und ein Teil der Schwenkhalterung 59 bei davon abgenommenem Hakenarm 17 gezeigt. Die Kupplungseinrichtung 65 dient dazu, den Behälter 5 mit der Ladearmvorrichtung 9 zu koppeln, wenn der Hakenarm 17 in seine Passivstellung gemäß Fig. 4a - 4c überführt wird. Die Kupplungseinrichtung 65 umfasst einen quer zur Fahrzeuglängsrichtung an dem Hebearm 11 verschiebbar geführten Bolzen 67, der in eine am Boden des Behälters 5 befestigte Kupplungsöse 69 einführbar ist, um den Behälter 5 an dem Hebearm 11 zu sichern. Die Verschiebung des Bolzens 67 erfolgt mechanisch gesteuert durch die Schwenkbewegung des Hakenarms 17. Zur Steuerung des Bolzens 67 weist ein sich mit dem Hakenarm 17 um die Achse 61 drehendes Element 71 der Schwenkhalterung 59 zwei in Umfangsrichtung des Elements 71 um 90° versetzte, radial nach außen abstehende Vorsprünge 73a, 73b auf, die mit einem Anschlag 75 des Bolzens 67 zusammenwirken. Die in Fig. 5 gezeigte Stellung des Bolzens 67 und des Elements 71 korrespondiert mit der vertikal aufrechten Stellung des Hakenarms 17, wobei der Bolzen 67 aus der Kupplungsöse 69 herausgezogen ist und wobei der Anschlag 75 von dem Vorsprung 73b in Richtung weg von der Kupplungsöse 69 beaufschlagt ist. Wird der Hakenarm 17 nun in seine Passivstellung gemäß Fig. 4b verschwenkt, so dreht sich das Element 71 im Uhrzeigersinn, so dass der Vorsprung 73a mit dem Anschlag 75 in Eingriff kommt und diesen in Richtung zur Kupplungsöse 69 hin mitnimmt, bis der Bolzen 67 in die Kupplungsöse 69 eingreift. Das Herausziehen des Bolzens 67 aus der Kupplungsöse 69 erfolgt analog, wenn der Hakenarm 17 wieder in seine aufrechte Stellung gemäß Fig. 3 verschwenkt wird.

Bei dem gezeigten Ausführungsbeispiel kann der Kippbetrieb (vgl. Fig. 6b) bei in Passivstellung befindlichem Hakenarm 17 erfolgen, wobei die Kupplungseinrichtung 65 den Behälter 5 an der Ladearmvorrichtung 9 hält.

Alternativ könnte es vorgesehen sein, dass die Kopplung zwischen Ladearmvorrichtung 9 und Behälter 5 im Kippbetrieb durch Eingriffnahme des Aufnahmebügels 21 durch den Haken 19 bei aufrecht stehendem Hakenarm 17 erfolgt. Insbesondere können Sicherungsmittel vorgesehen sein, die verhindern, dass der Kippbetrieb eingeleitet werden kann, wenn sich der Hakenarm in der vertikal aufrechten Stellung befindet und gleichzeitig der innere Hakenarmteil 17b teleskopisch in den äußeren Hakenarmteil 17a gemäß Fig. 3 eingezogen ist.

Für normale Transportfahrten mit dem Fahrzeug 3 wird die Abrollkippvorrichtung 1 in den Zustand gemäß Fig. 4a - 4c versetzt. Dabei befindet sich der Hebearm 11 in seiner Grundstellung, wobei die Ladearmvorrichtung 9 in ihrer ausgefahrenen Teleskopstellung ist. Der Kippverlängerungsarm 13 ist in seiner im Wesentlichen horizontalen Position mittels der Verriegelungseinrichtung 41 an dem Aufbau 7 fixiert, und der aufgeladene Behälter 5 ist über die Kupplungseinrichtung 65 mit der Ladearmvorrichtung 9 gekoppelt, wobei der Hakenarm 17 in seiner Passivstellung ist.

Alternativ kann die Kopplung zwischen dem Behälter 5 und der Ladearmvorrichtung 9 durch Eingriffnahme des Aufnahmebügels 21 durch den Haken 19 bei Transportfahrten gewählt werden, wenn es auf den freien Zugang zur vorderen Stirnseite des Behälters 5 während der Fahrt nicht ankommt.

Bei dem gezeigten Ausführungsbeispiel ist zur Sicherung des Behälters 5 an dem Aufbau 7 wenigstens ein Aufnahmeriegel 77 befestigt, der in eine Riegellasche 79 des Behälters 5 eingreift, wenn der auf den Aufbau 7 hinaufgezogene Behälter 5 aus der Stellung gemäß Fig. 2a durch Ausfahren der Kolbenstangen 23a der Kolben-Zylinder-Aggregate 23 nach vorn in die Transportstellung gemäß Fig. 4a verschoben wird.

In der eingezogenen Teleskopstellung der Ladearmvorrichtung 9 gemäß Fig. 2a ist der Behälter 5 so weit zurückgeschoben, dass die Riegellasche 79 von dem Aufnahmeriegel 77 entfernt ist.

Wie aus den Fig. 1 und 6b zu ersehen ist, erfolgen der Ladebetrieb und der Kippbetrieb bei von dem Aufnahmeriegel 77 freigegebener Riegellasche 79.

Es sei noch darauf hingewiesen, dass insbesondere bei flacheren Behältern 5 der Aufnahmebügel 21 auch im Bereich des oberen Randes der vorderen Stirnseite angeordnet sein kann, so dass er zumindest teilweise oberhalb der vorderen Behälterstirnseite liegt.

Ferner könnten Haken und Bügel vertauscht werden, so dass der Hakenarm mit einem bügelartigen Kopplungselement und der Behälter mit einem hakenartigen Kopplungselement für den gegenseitigen Eingriff ausgestattet sind.

## Patentansprüche

1. Vorrichtung zum Hinaufziehen und Absetzen eines Behälters (5) auf bzw. von einem Aufbau (7) eines Lastentransportfahrzeugs (3) über eine Ladestütze (29) am hinteren Ende des Aufbaus (7),
mit einer Ladearmvorrichtung (9), die einen Hebearm (11) aufweist, der - im montierten Zustand am Fahrzeug (3) - um eine quer zur Fahrzeuglängsrichtung verlaufende Schwenkachse (15) zwischen einer Grundstellung und einer Auslegerstellung relativ zu dem Aufbau (7) mittels eines Schwenkantriebs (23) schwenkbar ist, um den Behälter (5) auf den Aufbau (7) hinaufzuziehen bzw. von dem Aufbau (7) abzusetzen, und der sich in der Grundstellung von der Schwenkachse (15) in Fahrzeuglängsrichtung nach vorn erstreckt, und
mit einem Hakenarm (17), der zur Kopplung mit dem Behälter (5) an dem von der Schwenkachse (15) entfernten Ende des Hebearms (11) angeordnet ist und einen Haken (19) zur Eingriffnahme eines Bügels (21) aufweist, der am Behälter (5) in Fahrzeuglängsrichtung nach vorn zu positionierenden, vorderen Stirnseite des Behälters (5) angeordnet ist, wobei der Hakenarm (17) quer zur Schwenkachse (15) von dem Hebearm (11) derart absteht, dass er in eine im Wesentlichen vertikal aufrechte, zentrale Position in Front der vorderen Stirnseite des Behälters (5) gelangt, wenn der Hebearm (11) beim Hinaufziehen des Behälters (5) in die Grundstellung geschwenkt wird,
**dadurch gekennzeichnet,**
dass der Hakenarm (17) bei in der Grundstellung befindlichen Hebearm (11) aus der im Wesentlichen vertikal aufrechten, zentralen Position in Front des Behälters (5) entfernbar an dem Hebearm (11) angeordnet ist.

2. Vorrichtung zum Hinaufziehen und Absetzen eines Behälters nach Anspruch 1, **dadurch gekennzeichnet,** dass bei auf dem Aufbau (7) befindlichem Behälter (5) der Haken (19) des Hakenarms (17) in der Grundstellung des Hebearms (11) von dem Bügel des Behälters (21) lösbar ist und dass der Hakenarm (17) nach Lösen des Hakens (19) von dem Bügel (21) aus der im Wesentlichen vertikal aufrechten, zentralen Position heraus in eine Passivstellung verschwenkbar ist, um den Zugang zu einem zuvor von dem Hakenarm (17) überdeckten, zentralen Bereich der vorderen Stirnseite des Behälters (5) freizugeben.

3. Vorrichtung zum Hinaufziehen und Absetzen eines Behälters nach Anspruch 2, **dadurch gekennzeichnet,** dass der Hakenarm (17) um eine quer zur Schwenkachse (15) des Hebearms (11) verlaufende Achse (61) schwenkbar an dem Hebearm (11) angeordnet ist und in der Passivstellung im Wesentlichen horizontal von dem Hebearm (11) seitlich absteht.

4. Vorrichtung zum Hinaufziehen und Absetzen eines Behälters nach Anspruch 2 oder 3, **dadurch gekennzeichnet,** dass der Hakenarm (17) in der Passivstellung die vordere Stirnseite eines auf dem Aufbau (7) hinaufgezogenen Behälters (5) im Wesentlichen vollständig überlappungsfrei für den Zugang von vorn freigibt.

5. Vorrichtung zum Hinaufziehen und Absetzen eines Behälters nach einem der Ansprüche 2 - 4, **gekennzeichnet durch** einen Hakenarm-Schwenkantrieb (63) zum Schwenken des Hakenarms (17) zwischen der vertikal aufrechten, zentralen Position und der Passivstellung.

6. Vorrichtung zum Hinaufziehen und Absetzen eines Behälters nach 5, **dadurch gekennzeichnet**, dass der Hakenarm-Schwenkantrieb (63) ein hydraulisch oder pneumatisch längenverstellbares Kolben-Zylinder-Aggregat umfasst, das einerseits an dem Hebearm (11) und andererseits an dem Hakenarm (17) gelenkig angeordnet ist.

7. Vorrichtung zum Hinaufziehen und Absetzen eines Behälters nach einem der vorhergehenden Ansprüche, **dadurch gekennzeichnet,** dass der Hakenarm (17) teleskopisch längenverstellbar ausgebildet ist.

8. Vorrichtung zum Hinaufziehen und Absetzen eines Behälters nach Anspruch 7, **dadurch gekennzeichnet,** dass zur teleskopischen Längenverstellung des Hakenarms (17) ein hydraulisch oder pneumatisch wirkender Stellantrieb (57) vorgesehen ist.

9. Vorrichtung zum Hinaufziehen und Absetzen eines Behälters nach einem der Ansprüche 2 - 8, **gekennzeichnet durch** eine Kupplungseinrichtung (65) zur Fixierung eines auf den Aufbau (7) hinaufgezogenen Behälters (5) an der Ladearmvorrichtung (9) bei in Passivstellung befindlichem Hakenarm (17).

10. Vorrichtung zum Hinaufziehen und Absetzen eines Behälters nach Anspruch 9, **dadurch gekennzeichnet,** dass die Kupplungseinrichtung einen an dem Hebearm (11) verschiebbar geführten Kupplungsbolzen (67) umfasst, der mit einer Kupplungsöse (69) des Behälters (5) in Eingriff bringbar ist.

11. Vorrichtung zum Hinaufziehen und Absetzen eines Behälters nach Anspruch 10, gekennzeichnet durch ein mechanisches Getriebe (71, 73, 75) zwischen dem Kupplungsbolzen (67) und dem Hakenarm (17), das den Kupplungsbolzen (67) in Abhängigkeit von der Schwenkstellung des Hakenarms (17) relativ zum Hebearm (11) steuert, so dass der Kupplungsbolzen (67) in eine Position zur Eingriffnahme der Kupplungsöse (69) gelangt, wenn der Hakenarm (17) in die Passivstellung einrückt.

12. Vorrichtung zum Hinaufziehen und Absetzen eines Behälters nach einem der vorhergehenden Ansprüche, **dadurch gekennzeichnet,** dass der Schwenkantrieb (23) des Hebearms (11) wenigstens ein einerseits über eine erste Gelenkverbindung (24) an dem Hebearm (11) und andererseits über eine zweite Gelenkverbindung (25) an dem Aufbau (7) oder einer relativ zu dem Aufbau (7) ortsfesten Stelle angelenktes, doppelt wirkendes Kolben-Zylinder-Aggregat (23a, 23b) umfasst, bei dem eine Kolbenstange (23a) relativ zu dem Zylinder (23b) ein- und ausfahrbar ist, um den Hebearm (11) um die Schwenkachse (15) zu schwenken.

13. Vorrichtung zum Hinaufziehen und Absetzen eines Behälters nach einem der vorhergehenden Ansprüche, **dadurch gekennzeichnet,** dass sie ferner dazu eingerichtet ist, einen auf dem Aufbau (7) befindlichen Behälter (5) um eine nächst der Ladestütze (29) und parallel zur Schwenkachse (15) verlaufende Kippachse (39) zu kippen, wobei die Ladearmvorrichtung (9) einen Kippverlängerungsarm (13) aufweist, der an seinem vorderen Ende über eine die Schwenkachse (15) definierende Schwenkgelenkanordnung mit dem Hebearm (11) - und an seinem hinteren Ende über eine die Kippachse (39) definierende Kippgelenkanorndung mit dem Aufbau (7) verbunden ist, wobei ferner eine Verriegelungseinrichtung (41) vorgesehen ist, mittels welcher der Hebearm (11) in seiner Grundstellung gegen Verschwenken um die Schwenkachse (15) am Kippverlängerungsarm (13) festlegbar ist, so dass der Hebearm (11) und der Kippverlängerungsarm (13) bei entsprechender Betätigung des Schwenkantriebs (23) des Hebearms eine gemeinsame Kippbewegung um die Kippachse (39) ausführen, und
dass die Verriegelungseinrichtung (41) ein von dem Kippverlängerungsarm (13) gehaltenes, wahlweise in eine erste Stellung zur Festlegung des Hebearms (11) relativ zum Kippverlängerungsarm (13) oder in eine zweite Stellung zur Festlegung des Kippverlängerungsarms (13) relativ zu dem Aufbau (7) bewegbares Verriegelungselement (45) aufweist, wobei der Hebearm (11) um seine Schwenkachse (15) relativ zum Kippverlängerungsarm (13) verschwenkbar ist, wenn das Verriegelungselement (45) in seiner zweiten Stellung den Kippverlängerungsarm (13) relativ zu dem Aufbau (7) festlegt.

14. Vorrichtung zum Hinaufziehen und Absetzen eines Behälters nach Anspruch 13, **dadurch gekennzeichnet,** dass das Verriegelungselement (45) ein axial verschiebbarer Verriegelungsbolzen ist, der beim Einrücken in seine erste Stellung in eine Verriegelungsöse (47) des Hebearms (11) - und beim Einrücken in seine zweite Stellung in eine in Bezug auf den Aufbau (7) ortsfeste Verriegelungsöse (51) eingreift.

15. Vorrichtung zum Hinaufziehen und Absetzen eines Behälters nach Anspruch 13 oder 14, **dadurch gekennzeichnet,** dass die Verriegelungseinrichtung (41) einen insbesondere fernbetätigbaren hydraulischen, pneumatischen oder elektromotorischen Antrieb für das Verriegelungselement (45) aufweist.

16. Vorrichtung zum Hinaufziehen und Absetzen eines Behälters nach einem der vorhergehenden Ansprüche 12 - 15, **dadurch gekennzeichnet,** dass die erste Gelenkverbindung (24) des Kolben-Zylinder-Aggregats (23a, 23b) bei in der Grundstellung befindlichem Hebearm (11) - im montierten Zustand am Fahrzeug - in Bezug auf die Fahrzeuglängsrichtung vor der zweiten Gelenkverbindung (25) des Kolben-Zylinder-Aggregats angeordnet ist.

17. Vorrichtung zum Hinaufziehen und Absetzen eines Behälters nach Anspruch 16, **dadurch gekennzeichnet,** dass die Ladearmvorrichtung (9) in einem Schubbetriebsmodus bei in der Grundstellung befindlichem Hebearm (11) durch den Antrieb des Kolben-Zylinder-Aggregats (23) zwischen einer ausgefahrenen Stellung und einer eingezogenen Stellung teleskopisch längenverstellbar ist, um einen auf dem Aufbau (7) befindlichen Behälter vor- oder zurückzuschieben, wobei eine Blockiereinrichtung (31) zum Ein- und Ausschalten des Schubbetriebsmodus durch Freigeben bzw. Unterbinden der teleskopischen Verschiebbarkeit vorgesehen ist,
dass die Kolbenstange (23a; 157) des Kolben-Zylinder-Aggregats (23; 155) zumindest teilweise ausgefahren ist, wenn die Ladearmvorrichtung (9; 107) in ihrer ausgefahrenen Teleskopstellung ist, so dass die Ladearmvorrichtung in die eingezogene Stellung durch Einfahren der Kolbenstange (23a; 157) überführbar ist und dass nach Ausschalten des Schubbetriebsmodus der Hebearm (11; 109) durch Ausfahren der Kolbenstange (57) aus seiner Grundstellung heraus schwenkbar ist.

18. Vorrichtung zum Hinaufziehen und Absetzen eines Behälters nach Anspruch 17, **dadurch gekennzeichnet,** dass zur Realisierung der teleskopischen Längenverstellbarkeit der Ladearmvorrichtung (9) der Hebearm (11) zwei teleskopisch längenverstellbar aneinander geführte Hebearmteile (11a, 11b) aufweist und dass die Blockiereinrichtung (31) dazu betätigbar ist, die beiden Hebearmteile (11a, 11b) in ihrer eingezogenen Teleskopstellung miteinander zu verriegeln, um den Schubbetriebsmodus auszuschalten.

19. Vorrichtung zum Hinaufziehen und Absetzen eines Behälters nach Anspruch 17, **dadurch gekennzeichnet,** dass nach Ausschalten des Schubbetriebsmodus der Hebearm (11) - je nach Stellung des Verriegelungselementes (45) der Verriegelungseinrichtung (41) - um die Schwenkachse (15) - oder gemeinsam mit dem Kippverlängerungsarm (13) um die Kippachse (39) schwenkbar ist.

20. Vorrichtung zum Hinaufziehen und Absetzen eines Behälters nach Anspruch 19, **dadurch gekennzeichnet,** dass zur Realisierung der Längenverstellbarkeit der Ladearmvorrichtung der Kippverlängerungsarm zwei teleskopisch längenverstellbar aneinander geführte Kippverlängerungsarmteile aufweist und dass die Blockiereinrichtung dazu betätigbar ist, die beiden Kippverlängerungsarmteile in deren eingezogener Teleskopstellung miteinander zu verriegeln, um den Schubbetriebsmodus auszuschalten.

21. Vorrichtung zum Hinaufziehen und Absetzen eines Behälters nach einem der Ansprüche 17 bis 20, **dadurch gekennzeichnet,** dass die Blockiereinrichtung (31) ein hydraulisch, pneumatisch oder elektromotorisch angetriebenes Blockierelement aufweist.

## Claims

1. Device for pulling up and setting down a container (5) on or from a body (7) of a load transporter (3) via a load support (29) at the rear end of the body (7), with a loading arm device (9) which has a lifting arm (11) which, when fitted on the vehicle (3), can be swivelled by means of a swivel drive (23) about a swivel axis (15) extending transverse to the longitudinal direction of the vehicle between a base position and an extension position relative to the body (7), to pull the container (5) up onto the body (7) or to set it down from the body (7) and which, in the base position extends from the swivel axis (15) to the front in the longitudinal direction of the vehicle, and with a hook arm (17) which is arranged on the end of the lifting arm (11) remote from the swivel axis (15) for coupling to the container (5) and has a hook (19) for engaging a bracket (21), which bracket (21) is arranged on the container (5) on the front end face of the container (5) to be positioned to the front in the longitudinal direction of the vehicle, wherein the hook arm (17) projects from the lifting arm (11) transverse to the swivel axis (15) in such a way that it arrives in a substantially vertically upright, central position in front of the front end face of the container (5) when the lifting arm (11) is swivelled into the base position when the container (5) is pulled up, **characterised in that** when the lifting arm (11) is in the base position, the hook arm (17) is arranged on the lifting arm (11) so as to be removable from the substantially vertically upright, central position in front of the container (5).

2. Device for pulling up and setting down a container according to claim 1, **characterised in that**, when the container (5) is on the body (7), in the base position of the lifting arm (11), the hook (19) of the hook arm (17) can be released from the bracket of the container (21) and in that, once the hook (19) has been released from the bracket (21), the hook arm (17) can be swivelled from the substantially vertically upright, central position into a passive position to clear access to a central region of the front end face of the container (5), previously covered by the hook arm (17).

3. Device for pulling up and setting down a container according to claim 2, **characterised in that** the hook arm (17) is arranged on the lifting arm (11) so as to be capable of swivelling about an axis (61) extending transverse to the swivel axis (15) of the lifting arm (11) and, in the passive position, projects laterally substantially horizontally from the lifting arm (11).

4. Device for pulling up and setting down a container according to claim 2 or 3, **characterised in that** the hook arm (17), in the passive position, clears the front end face of a container (5) pulled onto the body (7), substantially completely free of overlapping, for front access.

5. Device for pulling up and setting down a container according to any one of claims 2 to 4, characterised by a hook arm swivel drive (63) for swivelling the hook arm (17) between the vertically upright, central position and the passive position.

6. Device for pulling up and setting down a container according to 5 [sic], **characterised in that** the hook arm swivel drive (63) comprises a piston-cylinder unit which can be longitudinally adjusted hydraulically or pneumatically and is arranged in an articulated manner on the lifting arm (11) on the one hand and on the hook arm (17), on the other hand.

7. Device for pulling up and setting down a container according to any one of the preceding claims, **characterised in that** the hook arm (17) is telescopically longitudinally adjustable in design.

8. Device for pulling up and setting down a container according to claim 7, **characterised in that** a hydraulically or pneumatically operating actuator (57) is provided for the telescopic longitudinal adjustment of the hook arm (17).

9. Device for pulling up and setting down a container according to any one of claims 2 to 8, characterised by a coupling device (65) for fixing a container (5) pulled up onto the body (7) to the loading arm device (9) when the hook arm (17) is in the passive position.

10. Device for pulling up and setting down a container according to claim 9, **characterised in that** the coupling device comprises a coupling pin (67) displaceably guided on the lifting arm (11), which coupling pin (67) can be brought into engagement with a coupling eye (69) of the container (5).

11. Device for pulling up and setting down a container according to claim 10, characterised by a mechanical drive (71, 73, 75) between the coupling pin (67) and the hook arm (17) which controls the coupling pin (67) as a function of the swivel position of the hook arm (17) relative to the lifting arm (11), so the coupling pin (67) arrives in a position for engaging the coupling eye (69), when the hook arm (17) moves into the passive position.

12. Device for pulling up and setting down a container according to any one of the preceding claims, **characterised in that** the swivel drive (23) of the lifting arm (11) comprises at least one dual-acting piston--cylinder unit (23a, 23b) coupled, on the one hand, via a first articulated connection (24) to the lifting arm (11) and, on the other hand, via a second articulated connection (25) to the body (7) or a point which is stationary relative to the body (7), in which piston-cylinder unit (23a, 23b) a piston rod (23a) can be driven in and out relative to the cylinder (23b) to swivel the lifting arm (11) about the swivel axis (15).

13. Device for pulling up and setting down a container according to any one of the preceding claims, **characterised in that** it is also equipped to tilt a container (5) on the body (7) about a tilting axis (39) extending next to the loading support (29) and parallel to the swivel axis (15), wherein the loading arm device (9) has a tilting extension arm (13) which, at its front end, is connected to the lifting arm (11) via a swivel joint arrangement defining the swivel axis (15), and at its rear end is connected to the body (7) via a tilting coupling arrangement defining the tilting axis (39), a locking device (41) also being provided, by means of which the lifting arm (11) can be fixed in its base position against swivelling about the swivel axis (15) on the tilting extension arm (13), so the lifting arm (11) and the tilting extension arm (13) carry out a common tilting movement about the tilting axis (39) in the event of corresponding actuation of the swivel drive (23) of the lifting arm, and in that the locking device (41) has a locking element (45) which is held by the tilting extension arm (13) and can selectively be moved into a first position for fixing the lifting arm (11) relative to the tilting extension arm (13) or into a second position for fixing the tilting extension arm (13) relative to the body (7), wherein the lifting arm (11) can be swivelled about its swivel axis (15) relative to the tilting extension arm (13), when the locking element (45) in its second position fixes the tilting extension arm (13) relative to the body (7).

14. Device for pulling up and setting down a container according to claim 13, **characterised in that** the locking element (45) is an axially displaceable locking pin which, on moving into its first position, engages in a locking eye (47) of the lifting arm (11) and, on moving into its second position, engages in a locking eye (51) which is stationary with respect to the body (7).

15. Device for pulling up and setting down a container according to claim 13 or 14, **characterised in that** the locking device (41) has an, in particular remotely actuable, hydraulic, pneumatic or electric motor drive for the locking element (45).

16. Device for pulling up and setting down a container according to any one of the preceding claims 12 to 15, **characterised in that** the first articulated connection (24) of the piston-cylinder unit (23a, 23b), when the lifting arm (11) is in the base position, is arranged before the second articulated connection (25) of the piston-cylinder unit with respect to the longitudinal direction of the vehicle, when fitted on the vehicle.

17. Device for pulling up and setting down a container according to claim 16, **characterised in that** the loading arm device (9) in a push operating mode when the lifting arm (11) is in the base position, can be telescopically longitudinally adjusted by the drive of the piston-cylinder unit (23) between an extended position and a retracted position, to push a container located on the body (7) forwards or back, a blocking device (31) being provided for switching on and off the push operating mode by releasing or preventing the telescopic displaceability, in that the piston rod (23a; 157) of the piston-cylinder unit (23; 155) is at least partially driven out when the loading arm device (9; 107) is in its extended telescopic position, so the loading arm device can be transferred into the retracted position by driving in the piston rod (23a; 157) and in that, once the push operating mode has been switched off, the lifting arm (11; 109) can be swivelled out of its base position by driving out the piston rod (57).

18. Device for pulling up and setting down a container according to claim 17, **characterised in that** to achieve the telescopic longitudinal adjustability of the loading arm device (9), the lifting arm (11) has two lifting arm parts (11a, 11b) which are telescopically longitudinally adjustable and guided together and in that the blocking device (31) can be actuated to lock the two lifting arm parts (11a, 11b) to one another in their retracted telescopic position to switch off the push operating mode.

19. Device for pulling up and setting down a container according to claim 17, **characterised in that**, once the push operating mode has been switched off, the lifting arm (11), depending on the position of the locking element (45) of the locking device (41), can be swivelled about the swivel axis (15), or, together with the tilting extension arm (13), about the tilting axis (39).

20. Device for pulling up and setting down a container according to claim 19, **characterised in that** the tilting extension arm has two tilting extension arm parts which are guided together and can be telescopically longitudinally adjusted to achieve the longitudinal adjustability of the loading arm device and in that the blocking device can be actuated to lock the two tilting extension arm parts together in their retracted telescopic position to switch off the push operating mode.

21. Device for pulling up and setting down a container according to any one of claims 17 to 20, **characterised in that** the blocking device (31) has a hydraulically, pneumatically or electric motor driven blocking element.

## Revendications

1. Dispositif pour soulever et déposer un conteneur (5), respectivement sur et d'une superstructure (7) d'un camion (3), par l'intermédiaire d'un support de chargement (29) à l'extrémité arrière de la superstructure (7),
comportant un dispositif à bras de chargement (9), qui comporte un bras de levage (11), lequel - à l'état monté sur le véhicule (3) - peut pivoter autour d'un axe de pivotement (15), s'étendant perpendiculairement à la direction longitudinale du véhicule, entre une position de base et une position en porte-à-faux par rapport à la superstructure (7), au moyen d'un dispositif d'entraînement en pivotement (23), pour soulever le conteneur (5) sur la superstructure (7), ou le déposer de la superstructure (7), et qui, dans la position de base de l'axe de pivotement (15), s'étend vers l'avant dans la direction longitudinale du véhicule, et
comportant un bras à crochet (17) qui, pour l'accouplement avec le conteneur (5), est disposé à l'extrémité du bras de levage (11), éloignée de l'axe de pivotement (15), et comporte un crochet (19) pour entrer en prise avec un étrier (21) lequel est disposé sur le conteneur (5), sur le côté frontal avant du conteneur (5), à positionner vers l'avant dans la direction longitudinale du véhicule, le bras à crochet (17) dépassant du bras de levage (11), perpendiculairement à l'axe de pivotement (15), de manière à parvenir dans une position centrale, sensiblement verticale, face au côté frontal avant du conteneur (5), lorsque le bras de levage (11) est pivoté dans la position de base pendant que le conteneur (5) est soulevé,
**caractérisé en ce que**
lorsque le bras de levage (11) se trouve dans la position de base, le bras à crochet (17) est disposé sur le bras de levage (11) de manière à pouvoir s'écarter de la position centrale, sensiblement verticale, face au côté frontal avant du conteneur (5).

2. Dispositif pour soulever et déposer un conteneur selon la revendication 1, **caractérisé en ce que,** lorsque le conteneur (5) se trouve sur la superstructure (7), le crochet (9) du bras à crochet (17) en position de base du bras de levage (11), peut être détaché de l'étrier du conteneur (21), et en ce que le bras à crochet (17), agrès que le crochet (19) a été détaché de l'étrier (21), peut pivoter de la position centrale, sensiblement verticale, à une position passive, afin de dégager l'accès à une zone centrale du côté frontal avant du conteneur (5), recouverte auparavant par le bras à crochet (17).

3. Dispositif pour soulever et déposer un conteneur selon la revendication 2, **caractérisé en ce que** le bras à crochet (17) est disposé sur le bras de levage (11), de manière à pouvoir pivoter autour d'un axe (61), qui s'étend perpendiculairement à l'axe de pivotement (15) du bras de levage (11), et dépasse latéralement, sensiblement horizontalement, du bras de levage (11), dans la position passive.

4. Dispositif pour soulever et déposer un conteneur selon la revendication 2 ou 3, **caractérisé en ce que** le bras à crochet (17) en position passive, dégage, sensiblement sans aucun recouvrement, le côté frontal avant d'un conteneur (5) soulevé sur la superstructure (7), pour l'accès depuis l'avant.

5. Dispositif pour soulever et déposer un conteneur selon une des revendications 2 à 4, **caractérisé par** un dispositif d'entraînement en pivotement (63) à bras à crochet pour le pivotement du bras à crochet (17) entre la position centrale, verticale, et la position passive.

6. Dispositif pour soulever et déposer un conteneur selon la revendication 5, **caractérisé en ce que** le dispositif d'entraînement en pivotement (63) à bras à crochet comprend un ensemble à cylindre et piston réglable en longueur, hydrauliquement ou pneumatiquement, qui est disposé de manière articulée d'une part, sur le bras de levage (11) et d'autre part, sur le bras à crochet (17).

7. Dispositif pour soulever et déposer un conteneur selon une des revendications précédentes, **caractérisé en ce que** le bras à crochet (17) est réglable dans sa longueur de manière télescopique.

8. Dispositif pour soulever et déposer un conteneur selon la revendication 7, **caractérisé en ce que** pour le réglage télescopique de la longueur du bras à crochet (17), il est prévu un entraînement de positionnement (57) agissant hydrauliquement ou pneumatiquement.

9. Dispositif pour soulever et déposer un conteneur selon une des revendications 2 à 8, **caractérisé par** un dispositif d'accouplement (65) pour fixer un conteneur (5), soulevé sur la superstructure (7), sur le dispositif à bras de chargement (9), lorsque le bras à crochet (17) se trouve en position passive.

10. Dispositif pour soulever et déposer un conteneur selon la revendication 9, **caractérisé en ce que** le dispositif d'accouplement comprend une tige d'accouplement (67) qui est guidée coulissante sur le bras de levage (11) et qui peut être amenée en engagement avec un oeillet d'accouplement (69) du conteneur (5).

11. Dispositif pour soulever et déposer un conteneur selon la revendication 10, caractérisé par un mécanisme (71, 73, 75) entre la tige d'accouplement (67) et le bras à crochet (17), lequel mécanisme commande la tige d'accouplement (67) en fonction de la position de pivotement du bras à crochet (17), par rapport au bras de levage (11), de manière que la tige d'accouplement (67) parvienne dans une position pour son engagement avec l'oeillet d'accouplement (69), lorsque le bras à crochet (17) s'engage dans la position passive.

12. Dispositif pour soulever et déposer un conteneur selon une des revendications précédentes, **caractérisé en ce que** le dispositif d'entraînement en pivotement (23) du bras de levage (11) comprend au moins un ensemble à cylindre et piston (23a, 23b) et à double effet, articulé, d'une part, au bras de levage (11), par une première liaison articulée (24) et d'autre part, à la superstructure (7) ou à un emplacement fixe par rapport à la superstructure (7), par une deuxième liaison articulée (25), dans lequel une tige de piston (23a) peut être introduite dans le cylindre (23b) et extraite de celui-ci, pour faire pivoter le bras de levage (11) autour de l'axe de pivotement (15).

13. Dispositif pour soulever et déposer un conteneur selon une des revendications précédentes, **caractérisé en ce qu**'il est aménagé en outre pour faire basculer un conteneur (5), se trouvant sur la superstructure (7), autour d'un axe de basculement (39) s'étendant à proximité du support de chargement (29) et parallèlement à l'axe de pivotement (15), le dispositif à bras de chargement (9) comportant un bras de rallonge et de basculement (13) qui est relié, à son extrémité avant, au bras de levage (11), par un dispositif articulé de pivotement, définissant l'axe de pivotement (15), et à son extrémité arrière, à la superstructure (7), par un dispositif articulé de basculement, définissant l'axe de basculement (39), un dispositif de verrouillage (41) étant en outre prévu au moyen duquel le bras de levage (11) peut être fixé dans sa position de base, contre un pivotement autour de l'axe de pivotement (15) sur le bras de rallonge de basculement (13), de sorte que le bras de levage (11) et le bras de rallonge de basculement (13) exécutent un mouvement de basculement commun autour de l'axe de basculement (39), lorsque le dispositif d'entraînement en pivotement (23) est actionné en conséquence, et
en ce que le dispositif de verrouillage (41) comporte un élément de verrouillage (45) maintenu par le bras de rallonge de basculement (13), déplaçable au choix dans une première position de fixation du bras de levage (11), par rapport au bras de rallonge de basculement (13), ou dans une deuxième position pour la fixation du bras de rallonge de basculement (13) par rapport à la superstructure (7), le bras de levage (11) pouvant pivoter autour de son axe de pivotement (15), par rapport au bras de rallonge de basculement (13), lorsque l'élément de verrouillage (45) dans sa deuxième position fixe le bras de rallonge de basculement (13) par rapport à la superstructure (7).

14. Dispositif pour soulever et déposer un conteneur selon la revendication 13, **caractérisé en ce que** l'élément de verrouillage (45) est une tige de verrouillage qui peut coulisser axialement et qui, lorsqu'il passe dans sa première position, s'engage dans un oeillet de verrouillage (47) du bras de levage (11), et qui, lorsqu'il passe dans sa deuxième position, s'engage dans un oeillet de verrouillage (51) fixe par rapport à la superstructure (7).

15. Dispositif pour soulever et déposer un conteneur selon la revendication 13 ou 14, **caractérisé en ce que** le dispositif de verrouillage (41) comporte un dispositif d'entraînement hydraulique, pneumatique ou à moteur électrique, notamment commandable à distance, pour l'élément de verrouillage (45).

16. Dispositif pour soulever et déposer un conteneur selon une des revendications 12 à 15 précédentes, **caractérisé en ce que** la première liaison articulée (24) de l'ensemble à cylindre et piston (23a, 23b) est disposée devant - par rapport à la direction longitudinale du véhicule - la deuxième liaison articulée (25) de l'ensemble à cylindre et piston, lorsque le bras de levage (11) - à l'état monté sur le véhicule - se trouve dans la position de base.

17. Dispositif pour soulever et déposer un conteneur selon la revendication 16, **caractérisé en ce que** le dispositif à bras de chargement (9) est réglable en longueur de manière télescopique, en mode de fonctionnement en poussée, lorsque le bras de levage (11) se trouve dans la position de base, au moyen du dispositif d'entraînement de l'ensemble à cylindre et piston (23), entre une position extraite et une position rentrée, pour pousser vers l'avant ou vers l'arrière un conteneur se trouvant sur la superstructure (7), un dispositif de blocage (31) étant prévu pour mettre en marche et mettre à l'arrêt le mode de fonctionnement en poussée, en autorisant ou en interdisant la possibilité de coulissement télescopique,
en ce que la tige de piston (23a; 157) de l'ensemble à cylindre et piston (23 ; 155) est au moins partiellement ressortie lorsque le dispositif à bras de chargement (9; 107) se trouve dans sa position télescopique ressortie, de sorte que le dispositif à bras de chargement peut passer dans la position rentrée, par introduction de la tige de piston (23a ; 157), et qu'après coupure du mode de fonctionnement en poussée, le bras de levage (11 ; 109) peut pivoter hors de sa position de base, par sortie de la tige de piston (57).

18. Dispositif pour soulever et déposer un conteneur selon la revendication 17, **caractérisé en ce que** pour réaliser la possibilité de réglage télescopique de la longueur du dispositif à bras de chargement (9), le bras de levage (11) comporte deux parties de bras de levage (11a, 11b), guidées de manière télescopique et réglables en longueur, et en ce que le dispositif de blocage (31) peut être actionné pour verrouiller entre elles les deux parties de bras de levage (11a, 11b) dans leur position télescopique rentrée, afin de couper le mode de fonctionnement en poussée.

19. Dispositif pour soulever et déposer un conteneur selon la revendication 17, **caractérisé en ce qu**'après coupure du mode de fonctionnement en poussée, le bras de levage (11) peut pivoter - suivant la position de l'élément de verrouillage (45) du dispositif de verrouillage (41) autour de l'axe de pivotement (15) - ou avec le bras de rallonge de basculement (13), autour de l'axe de basculement (39).

20. Dispositif pour soulever et déposer un conteneur selon la revendication 19, **caractérisé en ce que** pour réaliser la possibilité de réglage en longueur du dispositif à bras de chargement, le bras de rallonge de basculement comporte deux parties de bras de rallonge de basculement, guidées l'une sur l'autre de manière télescopique et réglable en longueur, et en ce que le dispositif de blocage peut être actionné pour verrouiller entre elles les deux parties de bras de rallonge de basculement dans leur position télescopique rentrée, afin de couper le mode de fonctionnement en poussée.

21. Dispositif pour soulever et déposer un conteneur selon une des revendications 17 à 20, **caractérisé en ce que** le dispositif de blocage (31) comporte un élément de blocage entraîné hydrauliquement, pneumatiquement ou au moyen d'un moteur électrique.
